(19) Europäisches Patentamt

European Patent Office

Office européen des brevets

(11) EP 0 533 851 B2

(12) NEUE EUROPÄISCHE PATENTSCHRIFT

(45) Veröffentlichungstag und Bekanntmachung des Hinweises auf die Entscheidung über den Einspruch:
16.06.1999 Patentblatt 1999/24

(45) Hinweis auf die Patenterteilung:
03.08.1994 Patentblatt 1994/31

(21) Anmeldenummer: 91921022.9

(22) Anmeldetag: 11.05.1991

(51) Int. Cl.⁶: $B60S\ 1/08$

(86) Internationale Anmeldenummer:
PCT/DE91/00388

(87) Internationale Veröffentlichungsnummer:
WO 91/19631 (26.12.1991 Gazette 1991/29)

(54) **SCHEIBENWISCHVORRICHTUNG**

WINDSHIELD WIPER SYSTEM

SYSTEME D'ESSUIE-GLACE

(84) Benannte Vertragsstaaten:
DE FR GB IT

(30) Priorität: 12.06.1990 DE 4018713

(43) Veröffentlichungstag der Anmeldung:
31.03.1993 Patentblatt 1993/13

(73) Patentinhaber: ROBERT BOSCH GMBH
70442 Stuttgart (DE)

(72) Erfinder: PETER, Cornelius
D-7583 Ottersweiher (DE)

(56) Entgegenhaltungen:
EP-A- 0 184 609          US-A- 3 086 238
US-A- 4 423 362

• Patent Abstracts of Japan, Band 9, Nr. 226 (M-412)(1949), 12. September 1985
• Patent Abstracts of Japan, Band 9, NR: 102 (E-312)(1825), 4. Mai 1985
• DATABASE WPIL, Accession Nr. 84-042381, Derwent Publications Ltd. (London, GB), & SU,A,1012392 (CAR ELECTR. EQUIP. INSTR.), 15. April 1985

**Beschreibung**

Die Erfindung geht aus von einer Scheibenwischvorrichtung nach der Gattung des Hauptanspruchs. Ein von einem Elektromotor angetriebener Scheibenwischer, der auf einer zu reinigenden Scheibe eine hin- und hergehende Bewegung ausführt, weist einen unterschiedlichen Drehmomentbedarf während eines Wischzyklus auf, der beispielsweise von dem Zustand der zu reinigenden Scheibe sowie von der Position des Scheibenwischers abhängt. Eine große Änderung des Drehmomentbedarfs ist bei den Wendelagen des Scheibenwischers gegeben, dadurch, daß das erforderliche Antriebsmoment kurzzeitig den Wert Null annimmt. Der während eines Wischzyklus unterschiedliche Drehmomentbedarf führt bei dem Antriebsmotor zu unterschiedlichen Belastungen, die einen Einfluß auf die Geräuschentwicklung des Motors haben. Der kurzzeitige Wegfall des Antriebsdrehmoments in den Wendelagen führt, insbesondere bei den in zunehmendem Maße eingesetzten hochdrehenden Elektromotoren kleiner Baugröße zu einem vorübergehenden Drehzahlanstieg, der als besonders störend empfunden wird.

Aus der JP-A 60-82 467 ist eine gattungsgemäße Vorrichtung bekannt, bei der die Drehzahl des Antriebs über die gemessene elektromotorische Gegenkraft des Motors auf einen vorgegebenen Wert gesteuert wird. Die Ermittlung der elektromotorischen Gegenkraft ist nur im getakteten Betrieb möglich, bei dem der Motor die volle Betriebsspannung in Form von Impulspaketen zugeführt erhält. Der getaktete Betrieb kann unerwünschte elektromagnetische Störstrahlung erzeugen.

Eine weitere gattungsgemäße Vorrichtung ist aus der US-PS 3 086 238 bekannt. Im Vordergrund steht die Anpassung des Drehmoments eines Antriebsmotors einer Scheibenwischvorrichtung, die einen gleichmäßigen Scheibenwischerbetrieb sicherstellt, unabhängig davon, ob die Scheibe naß oder trocken ist. Die bekannte Vorrichtung enthält einen im Stromkreis des Antriebsmotors angeordneten Widerstand, dessen Widerstandswert vom fließenden Strom abhängt. Ein erhöhter Strom senkt den Widerstand, der damit einen noch höheren Strom zu fließen gestattet. Das vom Motor abgegebene Drehmoment steigt entsprechend an. Eine konstante Drehzahl kann mit der bekannten Vorrichtung noch nicht erreicht werden.

Der Erfindung liegt die Aufgabe zugrunde, eine Scheibenwischvorrichtung anzugeben, die eine reduzierte Geräuschentwicklung, einen erhöhten Wirkungsgrad und einen geringen Aufwand für die Entstörung erfordert.

Die Aufgabe wird durch die im Hauptanspruch angegebenen Merkmale gelöst.

Vorteile der Erfindung

Erfindungsgemäß ist vorgesehen, daß eine Schaltstufe die Betriebsspannung des Antriebsmotors in Abhängigkeit von dem durch den Motor fließenden Strom festlegt. Eine signalverarbeitende Anordnung gibt die Betriebsspannung des Antriebsmotors in Abhängigkeit von der gewünschten Drehzahl und dem durch den Motor fließenden Strom sowie in Abhängigkeit von dem bekannten Innenwiderstand des Antriebsmotors aus. Vorgesehene Mittel zum Erfassen der Betriebstemperatur des Motors, die ein Signal an die signalverarbeitende Anordnung abgeben, ermöglichen die Berücksichtigung der Betriebstemperatur des Motors auf die Motorkennzahlen.

Die erfindungsgemäß vorgesehenen Maßnahmen ermöglichen die Steuerung der Drehzahl des Antriebsmotors auf einen vorgegebenen Wert, wobei Voraussetzung ist, daß das vom Antriebsmotor abgegebene Drehmoment wenigstens näherungsweise dem durch den Motor fließenden Strom und die Drehzahl des Motors der inneren Motorspannung proportional sind.

Die wenigstens näherungsweise Konstanthaltung der Drehzahl des Antriebsmotors reduziert insbesondere in den Wendelagen des Scheibenwischers das Antriebsgeräusch. Dabei wird eine Änderung des Geräusches, auf die das menschliche Ohr besonders empfindlich reagiert, weitgehend vermieden.

Vorteilhafte Weiterbildungen und Ausgestaltungen der erfindungsgemäßen Scheibenwischvorrichtung ergeben sich aus abhängigen Ansprüchen.

Eine vorteilhafte Ausgestaltung sieht vor, daß zur Messung des durch den Antriebsmotor fließenden Stroms ein ohmscher Widerstand vorgesehen ist. Der Widerstand ist vorzugsweise in unmittelbarer Nähe des Antriebsmotors angeordnet. Mit dieser Maßnahme ist ebenfalls eine Korrektur des Einflusses der Betriebstemperatur auf die Motorkennzahlen möglich. Weiterhin ist auch mit dieser Maßnahme ein Übertemperaturschutz realisierbar.

Vorteile der Erfindung

Eine vorteilhafte Weiterbildung sieht eine Redundanz der Antriebsmotorstromversorgung vor, die im Normalbetrieb von einer von der signalverarbeitenden Anordnung angesteuerten Schaltstufe vorgenommen wird, die den elektrischen Leistungsteil für den Antriebsmotor enthält. Die hierzu erforderliche zusätzliche Schaltstufe kann beispielsweise die am Antriebsmotor anliegende Betriebsspannung detektieren und bei Unterschreiten eines vorgebbaren Wertes die Energieversorgung übernehmen. Der vorgebbare Wert für die Schaltschwelle liegt vorzugsweise geringfügig unter dem Wert der minimalen Betriebsspannung des Antriebsmotors, die für die geringste Wischgeschwindigkeit vorgesehen ist.

Weitere vorteilhafte Weiterbildungen und Verbesserungen ergeben sich aus weiteren Unteransprüchen in Verbindung mit der folgenden Beschreibung.

Zeichnung

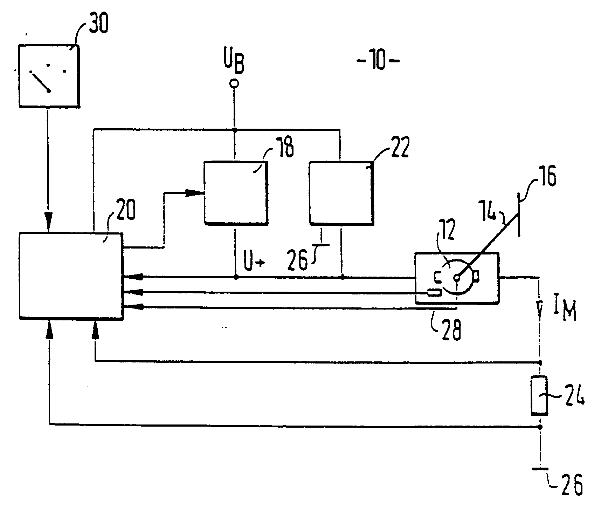

Die Figur zeigt ein Blockschaltbild einer erfindungsgemäßen Scheibenwischvorrichtung.

Die Scheibenwischvorrichtung 10 enthält einen elektrischen Antriebsmotor 12, der über einen Antriebsmechanismus 14 einen Scheibenwischer 16 betätigt. Zur Energieversorgung des Motors 12 ist eine Schaltstufe 18 vorgesehen, die ein Steuersignal von einer signalverarbeitenden Anordnung 20 zugeführt erhält. Die Schaltstufe 18 liegt an einer Versorgungsspannung $U_B$ und stellt eine Betriebsspannung $U_+$ für den Motor 12 zur Verfügung. An die Versorgungsspannung $U_B$ sind weiterhin die signalverarbeitende Anordnung 20 sowie eine zusätzliche Schaltstufe 22 angeschlossen. Die Leitung, an der die Betriebsspannung $U_+$ des Motors 12 liegt, ist außer mit dem Motor 12 noch mit der signalverarbeitenden Anordnung 20 und der zusätzlichen Schaltstufe 22 verbunden.

Der durch den Motor 12 fließende Strom $I_M$ wird mit Hilfe des an einem Widerstand 24 zu messenden Spannungsabfall in der Anordnung 20 ermittelt. Der Widerstand 24 ist gegen eine Masse 26 geschaltet. Dem Motor 12 ist ein Temperaturfühler 28 zugeordnet, der ein Signal der Anordnung 20 zuleitet. Ferner sind Mittel zur direkten Erfassung der Drehzahl des Motors 12 vorgesehen. Diese Mittel sind in der Figur mit einer von der Motorwelle zur Anordnung 20 führenden Leitung eingetragen, die das Drehzahlsignal übermittelt. Die signalverarbeitende Anordnung 20 ist ferner verbunden mit einem Bedienelement 30.

Die erfindungsgemäße Scheibenwischvorrichtung 10 arbeitet folgendermaßen:

Der elektrische Antriebsmotor 12 betätigt über den Antriebsmechanismus 14 den Scheibenwischer 16, der auf einer in der Figur nicht gezeigten Scheibe eine hin- und hergehende Bewegung ausführt. Anstelle eines Motors und eines Scheibenwischers 16 können sowohl mehrere Motoren 12 als auch mehrere Scheibenwischer 16 vorgesehen sein. Die signalverarbeitende Anordnung 20 in Verbindung mit der Schaltstufe 18 ist zunächst dazu vorgesehen, die Drehzahl des Motors 12 während des Wischvorgangs konstant zu halten. Das Konstanthalten der Drehzahl bewirkt eine Geräuschminderung und insbesondere eine Reduzierung von Geräuschänderungen. Drehzahländerungen ergeben sich durch das sich ändernde Drehmoment während eines Wischzyklus. Die betragsmäßig größte Änderung tritt in den Wendelagen des Scheibenwischers 16 auf, wo das erforderliche Antriebsmoment kurzzeitig zu Null wird. Die Drehzahl des kurzzeitig entlasteten Motors 12 könnte dann kurzzeitig ansteigen. Diese Drehzahländerungen des elektrischen Antriebsmotors 12 werden durch Regelung oder zumindest Steuerung der Drehzahl verhindert.

Die Drehzahl des Motors wenigstens zu steuern erfolgt ist durch eine Messung des durch den Motor 12 fließenden Stroms möglich. Die Drehzahl des Motors 12 ist der inneren Motorspannung $U_M$ proportional. Ebenso ist das vom Motor 12 abgegebene Moment M wenigstens näherungsweise dem durch den Motor 12 fließenden Strom $I_M$ proportional. Es ist somit möglich, die Motorkennlinie, die die Drehzahl als Funktion des Drehmoments wiedergibt, auf die elektrischen Ersatzgrößen des Motors 12 umzuschreiben und erhält dann als Kennlinie $U_M = U_B - Ri \times I_M$, wobei mit Ri der Innenwiderstand des Motors bezeichnet ist, der aus $U_B/I_K$ bestimmbar ist. Mit $I_K$ ist der Kurzschlußstrom des Motors bezeichnet, der herstellerseitig angegeben sein kann oder anhand einer Messung ermittelbar ist. Um eine konstante Motordrehzahl unabhängig vom Antriebsmoment zu erhalten, muß $U_M$ konstant gehalten werden. Die Betriebsspannung $U_+$ des Motors 12 muß dementsprechend nachgeführt werden. Die Betriebsspannung $U_+$ muß der Beziehung $U_+ = U_M + (U_B/I_K \times I_M)$ genügen. Verschiedene Wischgeschwindigkeiten und demzufolge verschiedene Solldrehzahlen sind durch unterschiedliche Werte für $U_M$ vorgebbar. Die vorzugebende Betriebsspannung $U_+$ für den Motor 12 hängt bei festgelegter Solldrehzahl dann nur noch vom zu ermittelnden Motorstrom $I_M$ ab. Eine Nachführung der Drehzahl ist so lange möglich, wie der vorzugebende Wert der Betriebsspannung $U_+$ den Wert der zur Verfügung stehenden Betriebsspannung $U_B$ nicht übersteigt Eine Soll-Drehzahl ist im gesteuerten Betrieb nicht präzise vorgebbar. Der ungefähre Wert der Solldrehzahl in Abhängigkeit von dem gemessenen Strom $I_M$ ist experimentell ermittelbar. Wesentlich ist die Konstanthaltung der Drehzahl im gesteuerten Betrieb.

Eine vorteilhafte Weiterbildung betrifft die Anordnung des Widerstands 24 in unmittelbarer Motornähe. Mit dieser Maßnahme ist eine Korrektur des Temperatureinflusses auf die elektrischen Kenngrößen des elektrischen Antriebsmotors 12 in der signalverarbeitenden Anordnung 20 möglich. Besonders vorteilhaft ist die Realisierung des Widerstandes 24 als eine entsprechend berechnete Kupferleiterbahn auf einer gedruckten Schaltung. Der Temperaturkoeffizient der Ankerwicklung des Elektromotors 12 und der des Widerstands 24 sind somit identisch und ermöglichen eine besonders einfache Korrektur des Temperatureinflusses ohne weitere Maßnahme. Es kann auch eine Überwachung der Betriebstemperatur mit dem separaten Temperaturfühler 28 vorgesehen sein, der unmittelbar dem Motor benachbart angeordnet ist.

Durch die Überwachung der Betriebstemperatur des Motors 12 ist auch ein wirksamer Schutz gegen thermische Überlastung gegeben, die beispielsweise bei einem Kurzschluß oder bei einem Blockieren des Antriebsmechanismusses 14 auftreten kann.

Bei einen Ausfall der Schaltstufe 18, die elektronische Leistungsbauelemente enthält, übernimmt die zusätzliche Schaltstufe 22 die Energieversorgung des elektrischen Antriebsmotors 12 und ermöglicht damit zumindest das Aufrechterhalten eines Notbetriebs der Scheibenwischvorrichtung 10. Die zusätzliche Schaltstufe 22 enthält beispielsweise eine Spannungsvergleichsschaltung, die die Betriebsspannung $U_+$ bezogen auf Masse 26 vergleicht. Liegt der gemessene Wert unterhalb der für die kleinste vorgewählte Drehzahl entsprechend der kleinsten Wischgeschwindigkeit des Scheibenwischers 16 vorzugebenden Betriebsspannung $U_+$, so kann ein Defekt der Schaltstufe 18 angenommen werden. Ohne weitere Maßnahmen ist eine Betriebsspannung $U_+$ von der zusätzlichen Schaltstufe 22 vorgebbar, die nahezu der erforderlichen Betriebsspannung $U_+$ für den Betrieb mit kleinster vorzugebender Wischgeschwindigkeit entspricht. Beieinemgeringfügig höheren elektronischen Schaltungsaufwand ist auch ein vollständiger Ersatz der Schaltstufe 18 durch die zusätzliche Schaltstufe 22 möglich, die dann auch die volle Betriebsspannung $U_+$ für den Betrieb mit maximaler Wischgeschwindigkeit zur Verfügung stellen kann.

Das Bedienelement 30 ist zum Ein- und Ausschalten der Scheibenwischvorrichtung 10 sowie für die Vorwahl einer Wischgeschwindigkeit oder eines Intervallbetriebs vorgesehen. Das Bedienelement 30 ist vorzugsweise mit der signalverarbeitenden Anordnung 20 verbunden, die die Schaltstufe 18 entsprechend dem vorgewählten Betrieb steuert.

**Patentansprüche**

1. Scheibenwischvorrichtung mit wenigstens einem elektrischen Antriebsmotor (12), der ein Antriebsmoment für wenigstens einen Scheibenwischer (16) bereitstellt, der eine hin- und hergehende Bewegung auf einer zu reinigenden Scheibe ausführt, mit einer signalverarbeitenden Anordnung (20), die über eine elektrische Schaltstufe (18) die Drehzahl des Motors (12) auf einen konstanten Wert steuert, dadurch gekennzeichnet, daß die Schaltstufe (18) die Betriebsspannung ($U_+$) des Motors (12) in Abhängigkeit von dem durch den Motor (12) fließenden Strom ($I_M$) festlegt und daß Mittel zum Erfassen der Betriebstemperatur des Motors (12) vorgesehen sind, die ein Signal an die signalverarbeitende Anordnung (20) abgeben.

2. Vorrichtung nach Anspruch 1, dadurch gekennzeichnet, daß der durch den Motor (12) fließende Strom ($I_M$) über den an einem Widerstand (24) auftretenden Spannungsabfall ermittelt wird.

3. Vorrichtung nach Anspruch 2, dadurch gekennzeichnet, daß der Widerstand (24) mit dem elektrischen Antriebsmotor (12) thermisch gekoppelt ist.

4. Vorrichtung nach Anspruch 1, dadurch gekennzeichnet, daß ein Bedienelement (30) zur Vorwahl wenigstens zweier unterschiedlicher Wischgeschwindigkeit und/oder der Betriebsart der Scheibenwischvorrichtung vorgesehen ist.

5. Vorrichtung nach Anspruch 1, dadurch gekennzeichnet, daß eine zusätzliche Schaltstufe (22) vorgesehen ist, die bei Ausfall der Schaltstufe (18) einen Notlaufbetrieb der Scheibenwischvorrichtung (10) ermöglicht.

**Claims**

1. Wiper device with at least one electric drive motor (12), which provides a driving torque for at least one wiper (16) which executes a reciprocating motion on a screen to be cleaned, with a signal-processing arrangement (20) which controls the speed of the motor (12), via an electrical switching stage (18), at a constant value, characterized in that the switching stage (18) establishes the operating voltage ($U_+$) of the motor (12) as a function of the current ($I_M$) flowing through the motor (12) and that means are provided for detecting the operating temperature of the motor (12), which means emit a signal to the signal-processing arrangement (20).

2. Device according to Claim 1, characterized in that the current ($I_M$) flowing through the motor (12) is determined via the voltage drop occurring across a resistor (24).

3. Device according to Claim 2, characterized in that the resistor (24) is thermally coupled to the electric drive motor (12).

4. Device according to Claim 1, characterized in that a control element (30) for the preselection of at least two different wiping speeds and/or of the operating mode of the wiper device is provided.

5. Device according to Claim 1, characterized in that there is provided an additional switching stage (22) which, if the switching stage (18) fails, makes possible emergency running operation of the wiper device (10).

**Revendications**

1. Dispositif d'essuie-glace comprenant au moins un moteur électrique d'entraînement (12) fournissant un couple d'entraînement à au moins un essuie-glace (16), qui effectue un mouvement de va et vient sur une glace à nettoyer, un dispositif de traitement de signaux (20), qui règle la vitesse de rotation du moteur (12) sur une valeur constante au moyen d'un circuit électrique de commutation (18),

caractérisé en ce que
le circuit de commutation (18) détermine la tension de fonctionnement ($U_+$) du moteur (12) en fonction de l'intensité du courant ($I_M$) passant à travers le moteur (12) et des moyens (28) détectent la température de fonctionnement du moteur (12), en fournissant un signal au dispositif de traitement de signaux (20).

2. Dispositif selon la revendication 1,
caractérisé en ce que
l'intensité ($I_M$) dans le moteur (12) est déterminée par la chute de tension sur une résistance (24).

3. Dispositif selon la revendication 2,
caractérisé en ce que
la résistance (24) est couplée thermiquement au moteur électrique (12).

4. Dispositif selon la revendication 1,
caractérisé par
un élément de réglage (30) pour présélectionner au moins deux vitesses d'essuyage différentes et/ou le mode de fonctionnement du dispositif d'essuie-glace.

5. Dispositif selon la revendication 1,
caractérisé par
un circuit additionnel de commutation (22) qui permet, en cas de panne du circuit de commutation (18), un fonctionnement de secours du dispositif d'essuie-glace (10).